# EUROPÄISCHE PATENTSCHRIFT

(11) **EP 0 890 471 B1**
(45) Veröffentlichungstag und Bekanntmachung des Hinweises auf die Patenterteilung: **01.10.2003**
(21) Anmeldenummer: 98110731.1
(22) Anmeldetag: 12.06.1998
(51) Int. Cl.: B60K 37/00

(54) **Instrumententafel mit Leuchtquellen in einem Kraftfahrzeug**
Instrument panel with light sources in a motor vehicle
Tableau de bord avec sources lumineuses dans une automobile

(30) Priorität: 11.07.1997 DE 19729855
(43) Veröffentlichungstag der Anmeldung: 13.01.1999
(73) Patentinhaber: Volkswagen Aktiengesellschaft, 38436 Wolfsburg (DE)
(72) Erfinder: Andronis, Odysseus, 38100 Braunschweig (DE); Hofmann, Gustav, 38118 Braunschweig (DE)

(56) Entgegenhaltungen:
- DE-A- 2 353 485
- DE-A- 2 948 721
- US-A- 5 316 359

## Beschreibung

Die Erfindung betrifft eine Instrumententafel mit Leuchtquellen nach dem Oberbegriff des Anspruchs 1.

In der Instrumententafel von Kraftfahrzeugen sind in der Regel Leuchtquellen enthalten, wie Kontrollleuchten und beleuchtbare Schalter, Taster und Instrumente. Das von solchen Leuchtquellen ausgehende Licht kann von einer Windschutzscheibe reflektiert werden, wodurch der Fahrzeugführer in der Durchsicht durch die Windschutzscheibe behindert und irritiert wird.

Zur Verhinderung solcher Reflexionen ist es allgemein bekannt, oberhalb von Leuchtquellen eine von der Instrumententafel vorspringende Abdeckwand vorzusehen, die verhindert, dass von den Leuchtquellen abgestrahltes Licht auf die Windschutzscheibe fällt. In einer anderen Lösung werden solche Leuchtquellen in Schächten oder Tunnels der Instrumententafel zurückversetzt angeordnet. Solche Anordnungen sind aufwendig, haben einen hohen Platzbedarf und sind optisch wenig ansprechend. Zudem kann die Handhabung von beleuchtbaren Schaltern durch Lichtabschirmungen erschwert und behindert werden. Tunnel- und schachtförmige Anordnungen sind nachteilige Staubfänger und nur aufwendig zu reinigen.
In einer weiter bekannten Anordnung zur Verhinderung von Lichtreflexionen in einer Windschutzscheibe von Leuchtquellen einer Instrumententafel (DE-OS 2 143 307) werden vor beleuchtbaren Instrumenten eine Vielzahl von Lamellen angeordnet. Dabei ist der Anstellwinkel der Lamellen so ausgerichtet, dass das von der Beleuchtung der Instrumente ausgehende Licht nicht über die Windschutzscheibe in den Augenbereich des Fahrzeugführers reflektierbar ist. In unterschiedlichen Ausführungsformen werden Anordnungen angegeben, bei denen Lamellen jeweils nur ein Instrument oder mehrere Instrumente abdecken und die Lamellen zur Anpassung an eine individuelle Augenhöhe in ihrem Anstellwinkel verstellbar sind.

Solche Lamellen sind zusätzliche Bauteile, die vor der Oberfläche von beleuchtbaren Instrumenten und vor der Instrumententafeloberfläche über Halteteile anzubringen sind, so dass eine solche Lösung aufwendig und kostenintensiv ist. Die Lamellen können leicht verschmutzen, sind schwierig zu reinigen und können beim Reinigen verbogen werden, sowie ggf. Klappergeräusche hervorrufen. Weiter erfordern solche Lamellen als zusätzliche Bauteile einen zusätzlichen Raumbedarf.

Um hier gewisse Verbesserungen zu erreichen ist eine ähnliche Anordnung bekannt (DE 27 08 433 C2), bei der die Lamellen in eine durchsichtige Abdeckscheibe eingebettet sind. Die Einbettung solcher Lamellen in eine Abdeckscheibe ist jedoch mit zusätzlichen Aufwand verbunden, wobei die Abdeckscheibe ein zusätzliches Bauteil mit zusätzlichem Platzbedarf bleibt.

Aus der gattungsgemäßen DE 29 48 721 A1 ist es bekannt, mehrere nicht reflektierende oder lichtabsorbierende Stege parallel zueinander im Abstand voneinander anzuordnen, wobei jeweils eine vordere Kante eines oberen Stegs mit einer hinteren Kante eines davor liegenden Stegs durch eine lichtdurchlässige Wand verbunden ist. Mit diesem Aufbau können aus der Instrumentenbeleuchtung stammende Lichtstrahlen derart auf die Windschutzscheibe gelenkt werden, dass die dort reflektierten Strahlen nicht in die Augenellipse gelangen können. Ein ähnlicher Aufbau ist auch aus der US 5,316,359 bekannt, die eine Instrumententafeloberfläche aufweist, die so beschaffen ist, dass durch die Windschutzscheibe gelangende Sonnenstrahlen von der zahnartigen Oberfläche so absorbiert und in Richtung auf die Windschutzscheibe abgelenkt werden, dass diese unterhalb der gewöhnlichen Augenebene von der Windschutzscheibe reflektiert werden bzw. die Intensität der in Richtung zur Augenebene von der Windschutzscheibe reflektierten Strahlung reduziert ist. Ein weiterer vom Prinzip her dazu ähnlicher Aufbau ist ferner auch aus der DT 23 53 485 A1 bekannt, bei dem ein Teil der Armaturentafel-Lichtquellen mit Mitteln zur Polarisation des von ihnen ausgesandten Lichtes versehen ist, wobei die Polarisationsebene so gewählt ist, dass die Helligkeit des von der Windschutzscheibe reflektierten Lichtes für den Fahrer möglichst gering ist.

Aufgabe der Erfindung ist es, eine Instrumententafel mit Leuchtquellen und mit einer Abschirmeinrichtung für ein Kraftfahrzeug zur Verhinderung von Reflexionen in einer Windschutzscheibe zu schaffen, bei der die Abschirmung bei guter Funktion einfach und kostengünstig ausführbar ist.

Diese Aufgabe wird mit den Merkmalen des Anspruch 1 gelöst.

Gemäß Anspruch 1 sind die Leuchtquellen in das Oberflächenprofil integriert.

Damit wird die Funktion der Lichtabschirmung unmittelbar in die Oberfläche der Instrumententafel verlegt, so dass keine zusätzlichen Bauteile, wie Lamellen mit aufwendigen Halterungen erforderlich sind. Die Leuchtquellen müssen auch nicht großflächig durch vorstehende Wandbereiche abgedeckt oder in Schächten oder Tunnels zurückversetzt angebracht werden. Dadurch sind die Leuchtquellen gut sichtbar ohne Beeinträchtigung der Sicht durch Abschirmelemente. Sofem es sich um beleuchtbare Bedienelemente handelt, sind diese gut und ohne Beeinträchtigung durch Abschirmelemente zugänglich und handhabbar. Das Oberflächenprofil kann optisch ansprechend und mit hoher Ästhetik ausgeführt werden. Insbesondere kann dabei der grundsätzliche Verlauf der Oberfläche eben oder großräumig gebogen sein, wobei das Oberflächenprofil lediglich eine Struktur dieser ebenen oder großräumig gebogenen Oberfläche ist.

Für eine gute Abschirmfunktion und eine einfache Herstellung des Oberflächenprofils beispielsweise durch Strangverfahren wird vorgeschlagen, die Lichtaustrittabschnitte und die Lichtabschirmabschnitte horizontal streifenförmig übereinanderliegend im Oberflächenprofil auszubilden.

Besonders geeignet sind dabei Wellenprofile, Sägezahnprofile oder Treppenprofile, bei denen in den Profiltälem und ggf. in den zur Windschutzscheibe hin ansteigenden Flanken die Leuchtquellen angeordnet sind. Die Profilerhebungen bilden dabei die Abschirmbereiche zur Windschutzscheibe hin. Optisch besonders geeignet sind Strukturen mit regelmäßigen Wellenanordnungen, wobei auch Kombinationen von Wellen-, Sägezahn- und Treppenprofilen möglich sind.

Je nach den Gegebenheiten kann das Oberflächenprofil an einem Blendenteil ausgeführt sein, das dann unmittelbar die Oberfläche der Instrumententafel bildet. Das Blendenteil kann dabei mit Lichtaustrittsöffnungen für Leuchtquellen Bereiche der Instrumententafel abdecken mit Lichtaustrittsöffnungen für Leuchtquellen Bereiche der Instrumententafel abdecken, wobei das Blendenteil zusammen mit Lichtaustrittsabschnitten der Leuchtquellen unmittelbar die Oberfläche der Instrumententafel bildet. Leuchtquellen können auch unter Bildung von Lichtaustrittsabschnitten des Oberflächenprofils im Blendenteil integriert und ggf. mit Gehäuse gehalten sein. Beide Möglichkeiten ergeben einen einfachen Aufbau mit kostengünstiger Montagemöglichkeit.

Bevorzugt sind in an sich bekannter Weise die Leuchtquellen als Leuchtdioden ausgebildet oder mit Leuchtdioden bestückt, die im Oberflächenprofil integriert oder in separaten Gehäusen im Oberflächenprofil gehalten sind, wobei Gehäusebereiche mit einem Lichtaustritt Bestandteile des Oberflächenprofils sind.

Bei einer entsprechenden Ausbildung von Gehäusen mit integrierten Abschirmungen können diese auch unmittelbar so aneinandergereiht werden, dass ein vorstehend genanntes Oberflächenprofil entsteht.

Besonders vorteilhaft kann die erfindungsgemäße Anordnung mit Leuchtquellen ausgeführt werden, die Kontrollleuchten und/oder beleuchtbare Schalter und/oder beleuchtbare Taster sind. Bevorzugt werden diese länglich in Profilrichtung ausgebildet, so dass sie mit relativ großer Leuchtfläche in das Oberflächenprofil integrierbar sind. Kontrollleuchten und die Schalter- und Tasterbeleuchtungen sind dabei gut sichtbar.

Zudem sind die Schalter und Taster ohne Behinderung durch große vorstehende Abschirmelemente gut zugänglich und bedienbar. Der Grundverlauf der Obertläche kann dabei vorteilhaft eben sein, wobei diese ebene Fläche lediglich gewellt ist.

In einer besonders vorteilhaften Anordnung wird das Oberflächenprofil als vertikaler Oberflächenprofilstreifen mit einer Reihe übereinander liegender Leuchtquellen in der Art eines Leuchtenfeldes an der Instrumententafel angeordnet. Dadurch wird erreicht, dass eine Vielzahl von Leuchtquellen bzw. Kontrollleuchten, Taster und Schalter auf engem Raum mit funktionsfähiger Lichtabschirmung anbringbar sind.

Eine raumsparende, zweckmäßige und optisch ansprechende Anordnung ergibt sich, wenn jeweils ein vertikaler Oberflächenprofilstreifen mit Leuchtquellen zu beiden Seiten eines Bedienfeldes, bevorzugt in einem mittleren Bereich der Instrumententafel angeordnet ist Das Bedienfeld und die vertikalen Oberflächenprofilstreifen mit Leuchtquellen können dabei Bestandteile eines auf die Instrumententafel aufsetzbaren Instrumentenblocks sein, der an der Instrumententafel mechanisch und elektrisch über ein eingebautes Steckersystem verbindbar ist. Damit ergibt sich eine kostengünstig vormontierbare Baueinheit, die schnell und einfach an der Instrumententafel montierbar ist.

Anhand einer Zeichnung werden Ausführungsbeispiele der Erfindung näher erläutert.

Es zeigen:
- Fig. 1: eine schematische Darstellung einer Instrumententafeloberfläche mit Leuchtquellen in einem Kraftfahrzeug und einer Abschirmeinrichtung als Wellenprofil zur Verhinderung von Reflexionen in einer Windschutzscheibe,
- Fig. 2: eine ähnliche Anordnung mit einer Abschirmeinrichtung als Sägezahnprofil, und
- Fig. 3: eine Draufsicht auf den mittleren Bereich einer Instrumententafel mit Kontrolleuchten, beleuchtbaren Schaltem und beleuchtbaren Tastern in einem Instrumentenblock.

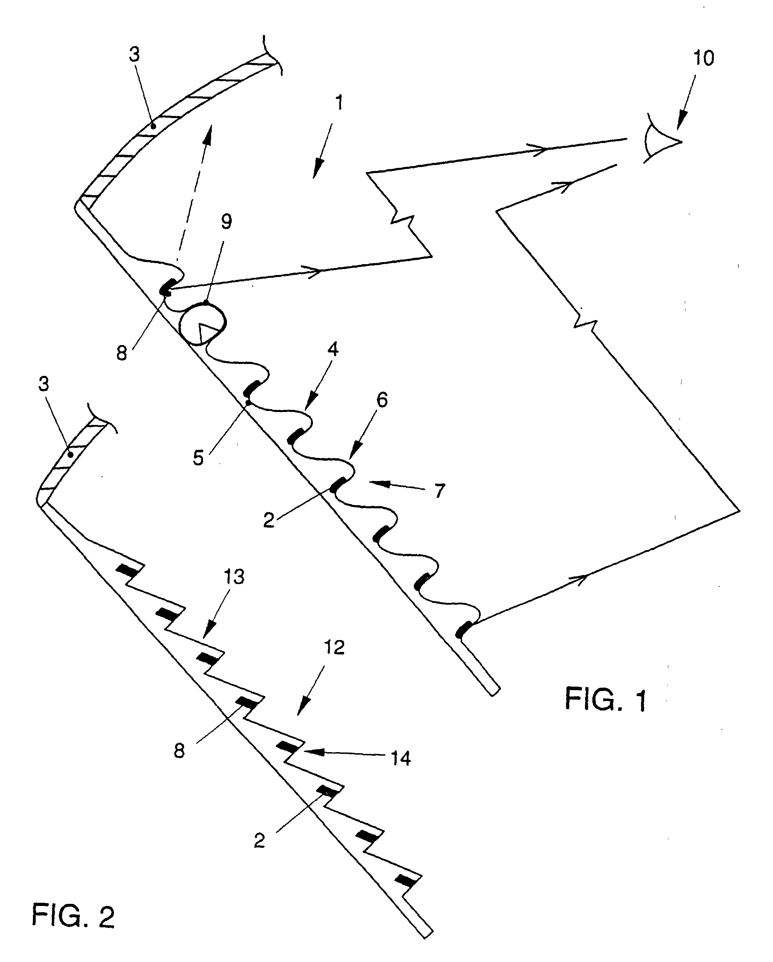

In Fig. 1 ist ein schematischer Vertikalschnitt durch eine innenraumseitige Wand einer Instrumententafel 1 eines Kraftfahrzeugs mit einem wellenförmigen Oberflächenprofil 4. zur Verhinderung von Reflexionen in einer Windschutzscheibe 3 dargestellt, die sich an die Instrumententafel 1 anschließt. Durch dieses Wellenprofil 4 werden abwechselnd Lichtaustrittsabschnitte 7 und Lichtabschirmabschnitte 6 ausgebildet, die horizontal streifenförmig übereinanderliegen. Die Lichtaustrittsabschnitte 7 werden dabei durch Lichtaustrittsöffnungen 8 festgelegt, die im Bereich von Profiltälern 5 des Wellenprofils 4 ausgebildet sind. Die Lichtabschirmausschnitte 6 sind dagegen durch die Profilerhebungen des Wellenprofils 4 gebildet.

Wie dies in der Fig. 1 dargestellt ist, können in der Instrumententafel 1 Leuchtdioden 2, die als Leuchtquellen dienen, entweder im Wellenprofil 4 integriert oder aber in separaten Gehäusen 9 im Wellenprofil 4 gehalten sein. Im letzeren Fall bilden dabei Bereiche des Gehäuses 9 einen Teil des Wellenprofils 4 aus.

Mit einem derartigen Aufbau wird das von den Leuchtdioden 2 abgestrahlte Licht aufgrund der Abschirmung durch die Profilerhebungen 6 nicht mehr in Richtung auf die Windschutzscheibe 3 abgestrahlt, wie dies in der Fig. 1 mit dem strichliert eingezeichneten Pfeil angedeutet ist. Die Abstrahlung erfolgt vielmehr lediglich in Richtung auf den Augenbereich. 10 des Fahrers, was in der Fig. 1 mit den beiden durchgezogenen Pfeilen dargestellt ist.

In der Fig. 2 ist als Alternative zum in Fig. 1 dargestellten Wellenprofil 4 eine Instrumententafel 12 mit einem Sägezahnprofil 13 dargestellt. Die Lichtaustrittsöffnungen 8 sind hier in den in Richtung zur Windschutzscheibe 3 hin ansteigenden Flanken 14 des Sägezahnprofils 13 ausgebildet.

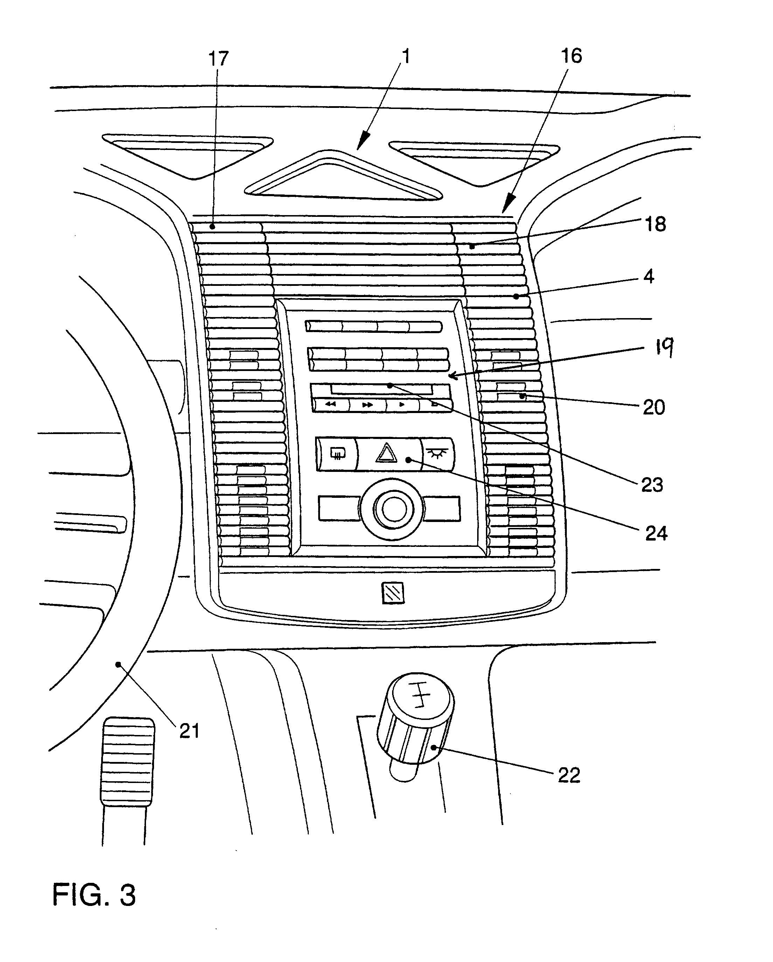

In der Fig. 3 ist eine Draufsicht auf den mittleren Bereich einer Instrumententafel 1 mit Leuchtquellen 20 in einem Instrumentenblock 16 dargestellt. Dieser Instrumentenblock 16 ist mit der Instrumententafel 1 mechanisch und über ein eingebautes Steckersystem elektrisch verbunden. Ferner ist der Instrumentenblock 16 benachbart zu einem Lenkrad 21 und einem Schalthebel 22 im mittleren Frontbereich eines Kraftfahrzeugs angeordnet.

Die Leuchtquellen 20 sind bevorzugt länglich ausgebildete Kontrolleuchten, beleuchtbare Schalter und/oder beleuchtbare Taster, die in einer Reihe übereinanderliegend in jeweils einem vertikalen Oberflächenprofilstreifen 17, 18 des Instrumentenblocks 16 angeordnet sind. Die Kontrolleuchten, Schalter- und Tasterbeleuchtungen sind somit gut sichtbar, gut zugänglich und gut bedienbar an der Instrumententafel 1 angeordnet. Die Oberflächenprofifstreifen 17, 18 sind ferner zu beiden Seiten eines Bedienfeldes 19 des Instrumentenblocks 16 angeordnet, das u.a. ein Kassettendeck 23 und verschiedene andere Schalter und Knöpfe, z.B. einen Schalter 24 zur Betätigung der Warnblinkanlage umfaßt.

## Patentansprüche

1. Instrumententafel mit Leuchtquellen (2; 20) und mit einer Abschirmeinrichtung für ein Kraftfahrzeug, die im in dem Kraftfahrzeug montierten Zustand der Instrumententafel (1; 12) Reflexionen in einer Windschutzscheibe (3) verhindert, wobei die Instrumententafel (1; 12) wenigstens im Bereich von Leuchtquellen (2; 20) ein Oberflächenprofil (4; 13) aufweist, wobei alternierend Lichtaustrittsabschnitte (7) von Leuchtquellen (2; 20) mit Lichtabschirmabschnitten (6) abwechseln, und die Lichtabschirmabschnitte (6) die Lichtaustrittsabschnitte (7) so abschirmen, dass davon im montierten Zustand der Instrumententafel (1; 12) kein Licht in die Windschutzscheibe (3) gelangt,
**dadurch gekennzeichnet,**
**dass** die Leuchtquellen (2; 20) in das Oberflächenprofil (4; 13) integriert sind.

2. Instrumententafel nach Anspruch 1, **dadurch gekennzeichnet, dass** die Lichtaustrittsabschnitte (7) und die Lichtabschirmabschnitte (6) horizontal streifenförmig am Oberflächenprofil (4; 13) übereinanderliegen.

3. Instrumententafel nach Anspruch 1 oder Anspruch 2, **dadurch gekennzeichnet, dass** das Oberflächenprofil als Wellenprofil (4) und/oder Sägezahnprofil (13) und/oder Treppenprofil ausgebildet ist und in Profiltälern (5) Leuchtquellen (2; 20) angeordnet sind.

4. Instrumententafel nach einem der Ansprüche 1 bis 3, **dadurch gekennzeichnet, dass** das Oberflächenprofi (4; 13) an einem Blendenteil ausgeführt ist, das die Leuchtquellen (2; 20) mit Lichtaustrittsöffnungen (8) unter Bildung von Lichtaustrittsabschnitten (7) des Oberflächenprofils (4; 13) abdeckt und/oder Leuchtquellen (2; 20) unter Bildung von Lichtaustrittsabschnitten (7) des Oberflächenprofils (4; 13) im Blendenteil integriert und gehalten sind.

5. Instrumententafel nach einem der Ansprüche 1 bis 4, **dadurch gekennzeichnet, dass** die Leuchtquellen (2; 20) Leuchtdioden sind, die in separaten Gehäusen (9) enthalten sind, von denen Gehäusebereiche Bestandteile des Oberflächenprofils (4; 13) sind.

6. Instrumententafel nach einem der Ansprüche 1 bis 5, **dadurch gekennzeichnet, dass** die Leuchtquellen (2; 20) Kontrollleuchten und/oder beleuchtbare Schalter (24) und/oder beleuchtbare Taster sind.

7. Instrumententafel nach einem der Ansprüche 1 bis 6, **dadurch gekennzeichnet, dass** wenigstens ein vertikaler Oberflächenprofilstreifen (17; 18) mit einer Reihe übereinander liegender Leuchtquellen (2; 20) in der Art eines Leuchtenfeldes an der Instrumententafel (1; 12) angeordnet ist.

8. Instrumententafel nach Anspruch 7, **dadurch gekennzeichnet, dass** je ein vertikaler Oberflächenprofilstreifen (17; 18) mit Leuchtquellen (2; 20) zu beiden Seiten eines Bedienfeldes (19) in einem mittleren Bereich der Instrumententafel (1; 12) angeordnet ist.

9. Instrumententafel nach Anspruch 8, **dadurch gekennzeichnet, dass** das Bedienfeld (19) und die vertikalen Oberflächenprofilstreifen (17, 18) mit Leuchtquellen (2; 20) Bestandteile eines auf die Instrumententafel (1; 12) aufsetzbaren Instrumentenblocks (16) sind, der dort mechanisch und elektrisch über ein eingebautes Steckersystem verbindbar ist.

## Claims

1. Instrument panel having luminous sources (2; 20) and having a shielding device for a motor vehicle, the shielding device preventing reflections in a windscreen (3) when the instrument panel (1; 12) is fitted in the motor vehicle, the instrument panel (1; 12) having a surface profile (4; 13) at least in the region of luminous sources (2; 20), with light-outlet sections (7) of luminous sources (2; 20) alternating with light-shielding sections (6), and the light-shielding sections (6) shielding the light-outlet sections (7) in such a manner that when the instrument panel (1; 12) is fitted no light passes from them to the windscreen (3), **characterized in that** the luminous sources (2; 20) are integrated in the surface profile (4; 13).

2. Instrument panel according to Claim 1, **characterized in that** the light-outlet sections (7) and the light-shielding sections (6) lie horizontally above one another in the form of strips on the surface profile (4; 13).

3. Instrument panel according to Claim 1 or Claim 2, **characterized in that** the surface profile is designed as a wavy profile (4) and/or serrated profile (13) and/or stepped profile, and luminous sources (2; 20) are arranged in valleys (5) of the profile.

4. Instrument panel according to one of Claims 1 to 3, **characterized in that** the surface profile (4; 13) is formed on a panel part which covers the luminous sources (2; 20) with light-outlet openings (8) forming light-outlet sections (7) of the surface profile (4; 13) and/or luminous sources (2; 20) are integrated and retained in the panel part forming light-outlet sections (7) of the surface profile (4; 13).

5. Instrument panel according to one of Claims 1 to 4, **characterized in that** the luminous sources (2; 20) are light-emitting diodes which are contained in separate housings (9), some areas of which are parts of the surface profile (4; 13).

6. Instrument panel according to one of Claims 1 to 5, **characterized in that** the luminous sources (2; 20) are warning lights and/or switches (24) which can be illuminated and/or push-buttons which can be illuminated.

7. Instrument panel according to one of Claims 1 to 6, **characterized in that** at least one vertical surface-profile strip (17; 18) having a series of luminous sources (2; 20) lying above one another is arranged on the instrument panel (1; 12) in the manner of a control light panel.

8. Instrument panel according to Claim 7, **characterized in that** a respective vertical surface-profile strip (17, 18) with luminous sources (2; 20) is arranged on both sides of an operating panel (19) in a central region of the instrument panel (1; 12).

9. Instrument panel according to Claim 8, **characterized in that** the operating panel (19) and the vertical surface-profile strips (17, 18) with luminous sources (2; 20) are parts of an instrument block (16) which can be placed onto the instrument panel (1; 12) and can be connected there mechanically and electrically via a fitted connector system.

## Revendications

1. Tableau de bord avec des sources lumineuses (2 ; 20) et un système de protection pour un véhicule à moteur, qui empêche, lorsque le tableau de bord (1 ; 12) est monté dans un véhicule à moteur, les réflexions sur un pare-brise (3), le tableau de bord (1 ; 12) possédant au moins dans la zone des sources lumineuses (2 ; 20) un profil de surface (4 ; 13), des éléments de sortie de lumière (7) des sources lumineuses (2 ; 20) alternant avec des éléments de protection contre la lumière (6), et les éléments de protection contre la lumière (6) protégeant les éléments de sortie de lumière (7) de telle façon, qu'aucune lumière ne parvienne au pare-brise (3) lorsque le tableau de bord (1 ; 12) est monté, **caractérisé en ce que** les sources lumineuses (2 ; 20) sont intégrées dans le profil de surface (4 ; 13) .

2. Tableau de bord selon la revendication 1, **caractérisé en ce que** les éléments de sortie de lumière (7) et les éléments de protection contre la lumière (6) sont positionnés sur le profil de surface (4 ; 13) horizontalement sous forme de bandes les uns sur les autres.

3. Tableau de bord selon la revendication 1 ou la revendication 2, **caractérisé en ce que** le profil de surface est formé comme un profilé ondulé (4) et/ou un profilé en dents de scie (13) et/ou un profilé en escaliers et que des sources lumineuses (2 ; 20) sont disposées dans les creux (5) du profilé.

4. Tableau de bord selon l'une des revendications 1 à 3, **caractérisé en ce que** le profil de surface (4 ; 13) est formé sur un élément écran qui recouvre les sources lumineuses (2 ; 20) avec des orifices de sortie de lumière (8) en formant des éléments de sortie de lumière (7) du profil de surface (4 ; 13) et/ou des sources lumineuses (2 ; 20), en formant des éléments de sortie de lumière (7) du profil de surface (4 ;13), sont intégrées et maintenues dans l'élément écran.

5. Tableau de bord selon l'une des revendications 1 à 4, **caractérisé en ce que** les sources lumineuses (2 ; 20) sont des diodes lumineuses, qui sont contenues dans des boîtiers séparés (9), dont les zones de boîtiers sont des composants du profil de surface (4 ; 13).

6. Tableau de bord selon l'une des revendications 1 à 5, **caractérisé en ce que** les sources lumineuses (2 ; 20) sont des témoins de contrôle et/ou des interrupteurs (24) éclairables et/ou des boutons éclairables.

7. Tableau de bord selon l'une des revendications 1 à 6, **caractérisé en ce qu'**au moins une bande profilée de surface verticale (17 ; 18) avec une série de sources lumineuses (2 ; 20) disposées les unes au dessus des autres est disposée en tant que champ lumineux sur le tableau de bord (1 ; 12).

8. Tableau de bord selon la revendication 7, **caractérisé en ce qu'**une bande profilée de surface verticale (17 ; 18) avec des sources lumineuses (2 ; 20) est disposée respectivement de part et d'autre d'un panneau de commande (19), dans une zone centrale du tableau de bord (1 ; 12).

9. Tableau de bord selon la revendication 8, **caractérisé en ce que** le panneau de commande (19) et les bandes profilées de surface verticales (17 ; 18) avec des sources lumineuses (2 ; 20) sont des composants d'un bloc d'instruments (16) pouvant être monté sur le tableau de bord (1 ; 12), pouvant être connecté au tableau de bord mécaniquement et électriquement par l'intermédiaire d'un système de connecteurs intégré.
